# EUROPEAN PATENT APPLICATION

(11) **EP 0 779 133 A2**
(43) Date of publication of application: **18.06.1997**
(21) Application number: 96109523.9
(22) Date of filing: 13.06.1996
(51) Int. Cl.: B26D 7/22, A41H 43/00, F16P 3/00

(54) **Straight knife machine with a sensing handle**

(30) Priority: 11.12.1995 US 570664
(71) Applicant: EASTMAN MACHINE COMPANY, Buffalo New York 14203 (US)
(72) Inventor: Andrews, David S., Lancaster, New York 14086 (US); Yetman, Robert M., Lakeview, New York 14085 (US); Nalecz, Andrew A., Williamsville, New York 14221 (US)
(74) Representative: Koepe, Gerd L., Dipl.-Chem.

(57) **Abstract**

A cutting machine (10) comprising a housing (20) having a base (14), a motor (22) carried by the housing (20), a handle extending (60) from the housing, a knife blade (26) having a cutting edge (28) and carried by the housing for reciprocal motion generally normal to the base in response to operation of the motor, a presser foot (30) movably carried by the housing located in spaced relation to the blade cutting edge and movable toward and away from the base, an electrically operated mechanism for holding the presser foot (30) at selected distances from the base (14) during operation of the machine, and characterized by a sensing circuit operatively connected to the handle and responsive to the handle being grasped and being released by the user, the sensing circuit being coupled to a control circuit for the motor and to the presser foot holding mechanism so that when the handle (60) is grasped by the use the motor is energized and the holding mechanism maintains the presser foot at a selected distance from the base, and when the handle is released by the user the motor is deenergized and the holding mechanism releases the presser foot to move to a position near the base thereby guarding the blade cutting edge. The handle is made sensitive to the hand of the user by an external layer of electrically conducting material (102) on the handle which layer is connected to the sensing circuit. A time delay circuit is provided so that the handle must be released for a predetermined time before the motor is deenergized and the holding mechanism releases the presser foot. A manually-operated switch (90) is operatively connected to the motor control circuit so that the switch must be operated and the handle must be grasped in order for the motor to be energized. A main electrical power switch is located on the machine external to the metal housing with line voltage supplied by conductors to one side of the switch and with conductors extending from the other side of the switch through the housing to the motor so that when the main power switch (170) is opened, no line voltage is present within the housing thereby preventing any electrical hazard to a person touching the metal housing when the main power switch is opened.

## Description

### Background Of The Invention

This invention relates to the art of cutting machines for cloth and other sheet materials in which cutting is effected by a reciprocating knife, and more particularly to new and improved control features for such machines.

One area of use of the present invention is in straight knife machines moved and guided manually over and along a surface supporting a stack or pile of sheets to be cut and wherein the knife is reciprocated generally normal to that surface, although the principles of the present invention can be variously applied. The blade of such machines is extremely sharp and can pose a safety hazard. For example, this can arise if the machine is turned on accidentally or inadvertently, or if the machine is left unattended while still operating. Even after the machine is turned off and the blade is no longer reciprocating, the blade edge is sharp enough to pose a hazard if not guarded. Since this type of machine is electrically operated and manually guided while in operation, attention also must be given to protecting the user from electrical hazards.

It would, therefore, be highly desirable to provide such a machine wherein accidental or inadvertent activation of the machine is prevented, wherein the machine is turned off automatically after it is left unattended, wherein the blade cutting edge is guarded when the machine is not operating, and wherein persons handling the machine are protected from electrical hazards.

### Summary of the Invention

It is, therefore, a primary object of this invention to provide a straight knife machine with new and improved control features.

It is a further object of this invention to provide such a machine having a control which prevents accidental or inadvertent activation of the machine.

It is a further object of this invention to provide such a machine having a control which turns off the machine automatically after it is left unattended.

It is a further object of this invention to provide such a machine having a control which causes the blade cutting edge to be guarded when the machine is not operating.

It is a further object of this invention to provide such a machine having a control which protects users of the machine from electrical hazard.

It is a more particular object of this invention to provide such a machine having a control which is relatively simple yet highly effective in operation.

The present invention provides a cutting machine comprising a housing having a base, a motor carried by the housing, a handle extending from the housing, a knife blade having a cutting edge and carried by the housing for reciprocal motion generally normal to the base in response to operation of the motor, presser foot means movably carried by the housing located in spaced relation to the blade cutting edge and movable toward and away from the base, electrically operated means for holding the presser foot means at selected distances from the base during operation of the machine, and characterized by sensing circuit means operatively connected to the handle and responsive to the handle being grasped and being released by the user, the sensing circuit means being coupled to a control circuit for the motor and to the presser foot holding means so that when the handle is grasped by the user the motor is energized and the holding means maintains the presser foot means at a selected distance from the base, and when the handle is released by the user the motor is deenergized and the holding means releases the presser foot means to move to a position near the base thereby guarding the blade cutting edge. The handle is made sensitive to the hand of the user by an external layer of electrically conducting material on the handle which layer is connected to the sensing circuit. A time delay circuit is provided so that the handle must be released for a predetermined time before the motor is deenergized and the holding means releases the presser foot means. A manually-operated switch means is operatively connected to the motor control circuit so that the switch means must be operated and the handle must be grasped in order for the motor to be energized. A main electrical power switch is located on the machine external to the metal housing with line voltage supplied by conductors to one side of the switch and with conductors extending from the other side of the switch through the housing to the motor so that when the main power switch is opened, no line voltage is present within the housing thereby preventing any electrical hazard to a person touching the metal housing when the main power switch is opened.

The foregoing and additional advantages and characterizing features of the present invention will become clearly apparent upon a reading of the ensuing detailed description together with the included drawing wherein:

### Brief Description Of The Drawing Figures

Fig. 1 is a side elevational view of a straight knife machine having the improved control of the present invention;
Fig. 2 is an enlarged longitudinal sectional view of the handle of the machine of Fig. 1;
Fig. 3 is an enlarged, fragmentary sectional view taken about on line 3-3 in Fig. 1; and
Fig. 4 is a schematic circuit diagram of one form of the control according to the present invention; and
Fig. 5 is a diagram like Fig. 4 showing another form of circuit.

### Detailed Description Of The Illustrated Embodiment

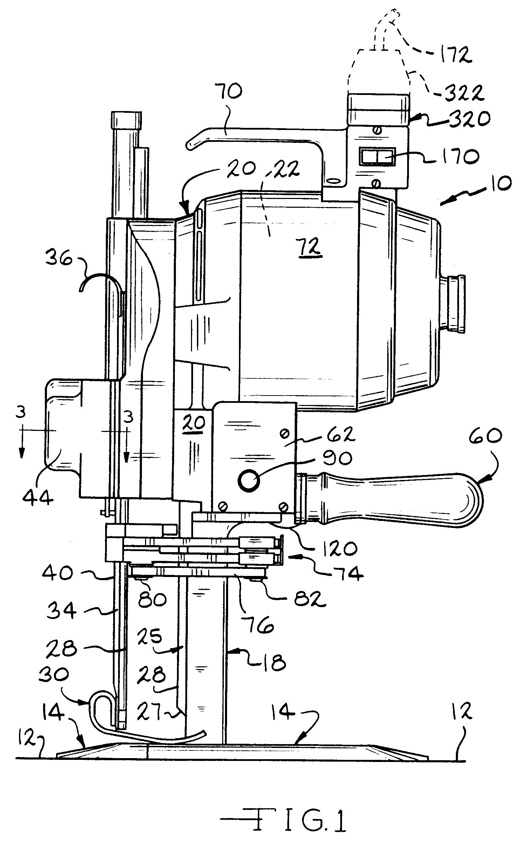

Referring now to Fig. 1, there is shown a machine generally designated 10 for cutting sheets of cloth or like material typically arranged in a stack or pile supported on a surface 12 such as the top of a cutting room table. Machine 10 includes a base or foot plate 14 adapted to rest on and to be moved about on surface 12 and to move under the lay of material as machine 10 is guided manually along surface 12. The peripheral portion of base 14 can be curved as shown in Fig. 1 to facilitate movement under the lay of material. In addition, base 14 can be provided with rollers (not shown) on the undersurface thereof to facilitate movement along surface 12. An elongated leg or standard 18 is fixed at one end to the upper surface of base 14 as viewed in Fig. 1 and extends in a direction generally perpendicular to base 14, i.e. vertically as viewed in Fig. 1. The opposite or upper end of leg 18 as viewed in Fig. 1 joins a machine housing generally designated 20. An electric motor 22 is carried by housing 20 and electrical power is supplied thereto in a manner which will be shown and described presently. An elongated cutting blade 26 is movably supported at one end, i.e. the upper end as viewed in Fig. 1, in housing 20 for reciprocating movement in response to operation of motor 22 in a known manner and in a direction toward and away from base 14. The knife blade 26 extends downwardly along standard 18, is spaced a short distance therefrom and terminates in an end 27 spaced a short distance from the upper surface of plate 14, this distance being determined by the length of the reciprocating cutting strokes of blade 26. Blade 26 has a cutting edge 28 extending therealong and facing in a direction opposite that of standard 18. This direction, i.e. to the left as viewed in Fig. 1, is the forward cutting direction of machine 10.

The machine 10 of Fig. 1 further includes a presser foot 30 in the form of a curved metal element which is fixed to one end of a shaft or guard rod 34 which is movably carried by the machine housing and is disposed generally perpendicular to the plane of base 14. Blade 26 is received between two arms of a fork-like formation at the end of foot 30 in a known manner. Shaft 34 is provided with a handle 36 at the opposite end, i.e., the upper end as viewed in Fig. 1, whereby the presser foot 30 can be moved manually between selected vertical positions as viewed in Fig. 1 to be set at different levels according to the thickness of the different lays or piles of material to be cut. In particular, shaft 34 is provided with teeth 40 along its length. A pin, tooth or other suitable formation (not shown in Fig. 1) located in a housing 44 engages teeth 40 in a ratcheting manner, i.e. allowing movement of shaft 34 in a direction toward the base 14 when allowed to ratchet but preventing movement in the opposite direction. The pin, tooth or other formation is moved out of engagement with shaft 34 by operation of a lever (not shown). In particular, one end of the lever operatively contacts a mechanism associated with the pin, tooth or other formation, and the other end of the lever is located for manual operation. The lever is pivotally connected at an intermediate location to the housing 20 as will be described, and it is biased into the position of Fig. 1 whereby the pin or other formation engages teeth 40. The person operating the machine can manually operate the lever to cause presser foot 30 to fall or drop by gravity from an elevated position toward base 14. For a more detailed description of such a lever, reference may be made to United States Patent No. 4,712,303 issued December 15, 1987 and assigned to the assignee of the present invention.

Machine 10 is moved and guided manually along surface 12 by a handle 60. The handle is disposed substantially parallel to the plane of base 14 and extends in a direction away from standard 18 on the side opposite blade 26. Handle 60 is connected to a portion 62 of housing 20, connection being made by a longitudinally extending threaded bolt in a manner which will be described. A hand-grip is fixed to the housing 72 of motor 22 and extends therefrom to facilitate lifting and carrying of the machine.

Machine 10 of the present illustration is of the type provided with a sharpener assembly generally designated 74 which is carried by housing 20 and normally located adjacent the upper end of blade 26 near the lower portion of housing 20. The sharpener 74 is moved in opposite directions, i.e., down and up along blade 26 as viewed in Fig. 1, by a suitable drive in housing 20 operated by motor 22 whenever sharpening of blade 26 is desired. Sharpening is provided by abrasive belts one of which is designated 76 trained around rollers, two of which are designated 80 and 82, in Fig. 1. Sharpener 74 is of a type known in the art, and for a more detailed description of a sharpener of the type shown in Fig. 1, reference may be made to U.S. Pat. No. 2,829,474 issued April 8, 1958 in the name of F.G. Clark entitled "Knife Sharpening Mechanism" and assigned to the assignee of the present invention, hereby incorporated by reference.

The cutting edge 28 of blade 26 is extremely sharp. During cutting operations when machine 10 is operating, the person using the machine is cognizant of the blade 26 and customarily takes adequate precautions. Also, during cutting operations a significant portion of the blade edge 28 is occupied by cutting the stack of cloth, and the shaft 34 extending upwardly from presser foot 30 on top of the stack serves partially as a guard with respect to the remaining portion of the blade edge. When the machine 10 is not in use, however, the exposed edge 28 of blade 26 can pose a safety hazard. If the presser foot 30 is in the down position, i.e. resting on base 14, the shaft 34 serves as a guard against a person moving his hand or arm inadvertently into contact with blade edge 28. In particular, when machine 10 is not in use, the edge 28 of blade 26 usually will not be covered by a stack of sheets of cloth or like material being cut. Therefore, it is important for safety reasons that the presser foot 30 is returned, i.e. lowered to a location resting on base 14 so that shaft 34 can serve as a guard with respect to the blade cutting edge 28. Also, when machine 10 is not in use and not intended to be in use, it is important for safety reasons because of the sharpness of blade edge 28 that machine 10 not be put in operation accidentally or inadvertently, such as by a person unintentionally engaging or contacting a control switch on machine 10. Furthermore, when machine 10 is in operation and left unattended for more than a momentary interval, it is important for safety reasons that it be turned off automatically.

In accordance with the present invention, control of machine 10 is centered around a sensing circuit means operatively connected to handle 60 and responsive to the handle being grasped and released by the user. In order to start machine 10, the user must grasp handle 60 and operate a manual push button switch 90 located on housing portion 62 near handle 60. The need for both of these events to occur prevents accidental or inadvertent activation of machine 10. Thus, the sensing circuit associated with handle 60 and manually operated switch 90 are operatively connected to the control circuit for motor 22 in a manner which will be described. The sensing circuit associated with handle 60 also is operatively coupled to an electrically operated means for holding presser foot 30 at whatever distance from base 14 is selected by the user through manipulation of handle 36 and lever 54. The electrically-operated holding means is located in housing 44 and is operatively associated with the pin, tooth or other formation which engages teeth 40 in shaft 34 in a manner which will be described. When handle 60 is grasped by the user, the sensing circuit causes the holding means to maintain presser foot 30 at the selected distance from base 14. When the user of machine 10 releases handle 60, the sensing circuit causes deactivation of machine 10, i.e. signals the motor control circuit to deenergize motor 22, and causes the holding means to release presser foot 30 to move to a position near base 14 so that shaft 34 is in the maximum guarding position relative to the blade cutting edge 28. A time delay circuit is provided so that the foregoing does not happen until a predetermined time elapses after the user releases handle 60. This provides flexibility for the user to remove his hand from the machine 10 for a few seconds if necessary due to whatever needs arise during a cutting operation.

Handle 60 is made sensitive to the hand of the user by an external layer of electrically conducting material on the handle which layer is connected to the sensing circuit. Referring to Fig. 2, handle 60 preferably comprises a body 100 of wood provided with a coating 102 on the exterior surface thereof which coating or layer is of electrically conducting material. By way of example, in an illustrative machine 10, coating 102 is a black, air-dry coating in the form of a phenolic modified resin which is commercially available from Flame Control Coatings, Inc. of Niagara Falls, New York under the designation Flame Control No. L-0841 Black Conductive Coating. Preferably the entire outer surface of handle body 100 is covered by coating 102. Handle 60 is fixed to housing portion 62 by means of a stud 106 pressed and glued into a longitudinal bore 108 extending into handle body 100 along about one-half the axial length thereof which stud 106 has a threaded end 110 which connects into a wall of housing portion 62. Between that wall and the axial end face 112 of handle body 100 is the combination of a lock nut 114, an insulating washer 116 and a conductive ring 118. Ring 118 contacts end face 112 and is in contact with the edge of coating 102 surrounding end face 112 so that a path for flow of electric current exists between coating 102 and ring 118. A conductive tab 120 extends from ring 118 into housing portion 62 as shown in Fig. 1 for making electrical connection to the sensing circuit contained therein in a manner which will be described.

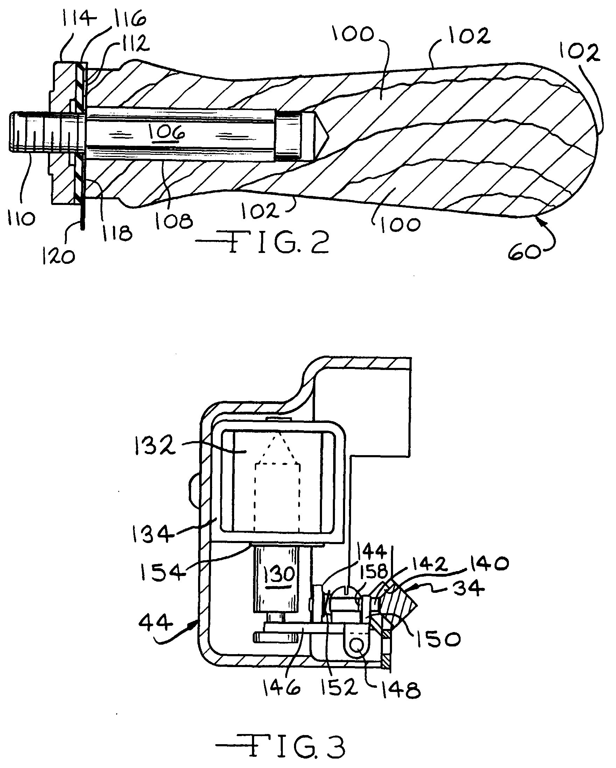

Fig. 3 illustrates a preferred form of the electrically operated holding means associated with presser foot 30, in particular with shaft 34. Within housing 44 is located a solenoid comprising a plunger 130 within a coil 132 contained in a solenoid housing 134 fixed to an inner wall surface of housing 44. The guard rod or shaft 34 extends through housing 44 and is guided by a retainer 140. The aforementioned pin, tooth or other formation which engages teeth 40 in shaft 34 comprises a guard rod lock element 142 which is movably carried by a bracket 144. A lever 146 connected at one end to the outer end of solenoid plunger 130 is pivoted at 148 in housing 44 and has the other end 150 thereof engaging element 142. The arrangement is shown in Fig. 3 with solenoid coil 132 energized drawing plunger 130 in. Guard rod element 142 is urged by a spring 152 into engagement with teeth 40 of shaft 34 thereby holding presser foot 30 at a selected vertical location. This can be adjusted via the ratcheting arrangement provided by the spring-biased element 142 engaging teeth 40 in a manner previously described. When solenoid coil 132 is deenergized, a solenoid spring 150 urges plunger 130 outwardly relative to coil 132. The end of plunger 130 moves lever 146 about pivot 148 causing the end 152 to engage a surface 158 on guard rod element 142 moving it to the left as viewed in Fig. 3 and out of engagement with teeth 40 of shaft 34. As a result, presser foot 34 falls by gravity to a position near base 14 so that shaft 34 is in the maximum guarding position relative to the blade cutting edge 28.

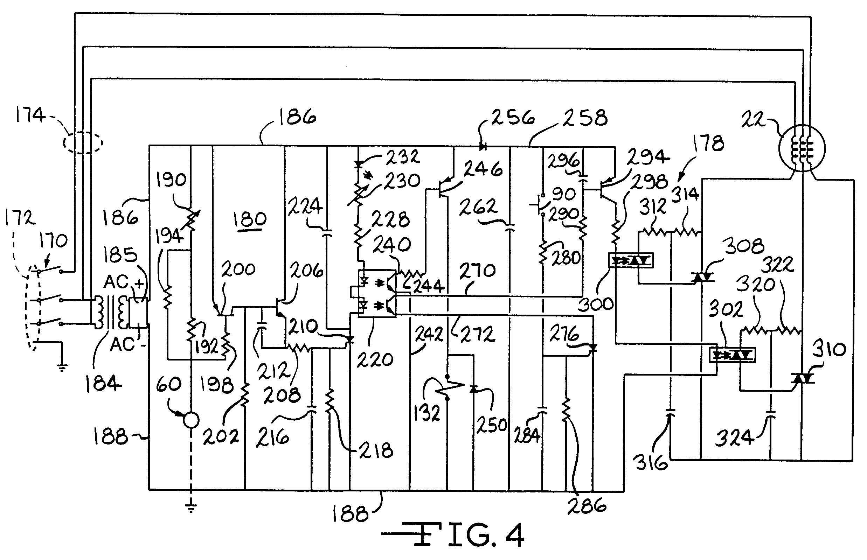

Fig. 4 shows the electrical circuit of machine 10 for supplying 3-phase electrical power to motor 22, for operating the sensing circuit associated with handle 60, and for operating the solenoid of the holding means for presser foot 30. A main power switch is designated 170 in Figs. 1 and 4 and is located on the outer surface of motor housing 72 and is electrically insulated therefrom. Conductors collectively designated 172 are in a cable which provides line voltage to one side of switch 170. Another group of conductors 174 connected to the opposite side of switch 170 supplies the line voltage to the coils of motor 22 when switch 170 is closed and under control of a motor control circuit generally designated 178 in Fig. 4. The sensing circuit is generally designated 180 in Fig. 4. The line voltage is stepped down to about 24 volts by a transformer 184 and rectified by component 185 to provide pulse-like waveforms on lines 186 and 188, respectively. The machine handle 60, with conductive coating 102, is connected in series with the combination of a variable resistor 190 and a fixed resistor 192 across lines 186 and 188. Resistor 192 is about twice the magnitude of resistor 190 and has a thermistor 194 connected in parallel therewith to provide temperature compensation. The junction between handle 60 and resistor 192 is connected through a resistor 198 to the base of a PNP transistor 200, the emitter of which is connected to line 186 and the collector of which is connected through a resistor 202 to line 188.

When handle 60 is not grasped by the user of machine 10, there is an open circuit between handle 60 and line 188 so that the voltage at the base of transistor 200 is relatively high thereby turning it off. When handle 60 is grasped by the user, this completes a circuit between handle 60 and line 188 lowering the voltage on the base of transistor 200 thereby turning it on. Resistor 202 serves to keep the collector of transistor 200 near ground or reference when turned off and avoids noise and false triggering.

The collector of transistor 200 is connected to the base of an NPN transistor 206, the collector of which is connected to line 186 and the emitter of which is connected through a current-limiting resistor 208 to the gate terminal of an SCR 210. A capacitor 212 connected between the base and emitter terminals of transistor 206 provides noise reduction during switching. The junction of resistor 208 and the SCR gate terminal is connected through the parallel combination of capacitor 216 and resistor 218 to line 188. Capacitor 216 provides noise reduction and resistor 218 avoids spurious firing of SCR 210. The cathode of SCR 210 is connected to line 188. The anode of SCR 210 is connected to the input of an optoisolator 220 and also through a capacitor 224 to line 186. The input of optoisolator 220 is connected through the series combination of a fixed resistor 228, variable resistor 230 and LED indicator 232 to line 186. The outputs of optoisolator are coupled to the motor control circuit 178 and to the solenoid of the presser foot holding means in a manner which will be described.

Thus, when the user of machine 10 grasps handle 60, transistors 200 and 206 are turned on thereby gating SCR into conduction and providing an input to optoisolator 220. When handle 60 is released, transistors 200 and 206 are turned off and capacitor 224 discharges to keep SCR 210 on for a time delay determined by the magnitude of capacitor 224 and resistor 230. If handle 60 is not re-grasped within that time delay, typically 0-6 seconds as set by adjusting resistor 230, SCR 210 will turn off when the waveform on line 186 reaches zero.

Optoisolator 220 has two outputs, one to coil 132 of the solenoid of the presser foot holding means and the other to the motor control circuit 178. In particular, lines 240 and 242 connect the optoisolator output to coil 132. Line 242 is connected to circuit line 188. Line 240 is connected through a current-limiting resistor 244 to the base of a PNP transistor 246, the emitter of which is connected to line 186 and the collector of which is connected to one terminal of coil 132, the other terminal of which is connected to line 188. A protective diode 250 is connected across coil 132.

Line 186 is connected to the anode of a diode rectifier 256, the cathode of which is connected to a line 258. D.C. is present between line 258 and line 188 to the right (as viewed in Fig. 4) of d.c. filter capacitor 262 connected between lines 258 and 188. The pulse-like waveform between lines 186 and 188 were necessary to insure proper turning off of SCR 210.

Lines 270 and 272 connect the output of optoisolator 220 to the motor control circuit 178. In particular, line 272 is connected to the anode of an SCR 276, the cathode of which is connected to line 188. The gate terminal of SCR 276 is connected through a resistor 280 to one terminal of push button switch 90, the other terminal of which is connected to line 258. The junction of resistor 280 and the SCR gate terminal is connected through the parallel combination of capacitor 284 and resistor 286 to line 188 to prevent spurious firing of SCR 276 and noise. Line 270 from optoisolator 220 is connected through a current limiting resistor 290 to the base terminal of a PNP transistor 294, the emitter of which is connected to line 258. The base terminal of transistor 294 is connected through a noise suppression capacitor 296 to line 258. The collector of transistor 294 is connected through a resistor 298 to the series connected inputs of a pair of optoisolators 300 and 302, the latter being connected to line 188. The outputs of optoisolators 300 and 302 are connected to the gate terminals of TRIACS 308 and 310, respectively, connected to corresponding windings of motor 22. A snubber network comprising resistors 312 and 314 and capacitor 316 is connected to optoisolator 300 and TRIAC 308. Similarly, a snubber network comprising resistors 320 and 322 and capacitor 324 is connected to optoisolator 302 and TRIAC 310.

When the user desires to place machine in operation he depresses switch button 90 which gates SCR 276 into conduction completing a circuit between lines 272 and 188 and grasps handle 60 which through the operation of the sensing circuit previously described completes the remainder of the output circuit of optoisolator 220 connected to line 270 which turns on transistor 294 and through optoisolators 300 and 302 turns on TRIACS 308 and 310 for operation of motor 22. Simultaneously, the grasping of handle 60 causes the sensing circuit through optoisolator 220 to energize solenoid winding 132 to hold presser foot 34 as previously described. Operation of motor 22 and the presser foot holding means continues until the user releases handle 60 for a time greater than the delay established by the time delay circuit previously described at which time the output of optoisolator 220 falls. This, in turn, causes transistor 246 to turn off thereby denergizing winding 132 and causes transistor 294 to turn off thereby turning off the TRIACS 308 and 310.

By way of example, in an illustrative machine, thermistor 194 is rated at 500K, potentiometer 190 is rated at 500K, resistors 192 and 198 have magnitudes of 1.2M and 68K, respectively, transistors 200, 246 and 294 are type 2N4403, transistor 206 is type 2N4401, capacitors 212 and 216 both have magnitudes of 0.1 microfared, resistors 208 and 218 have magnitudes of 220K and 22K, respectively and optoisolater 220 is commercially available from Nippon Electric Company under the designation PS2501-2. Variable resistor 230 has a maximum value of 10K, capacitor 224 has a magnitude of 100 microfarads and resistor 244 has a magnitude of 3.3K. Capacitors 262 and 284 have magnitudes of 4.7 microfarads and 0.1 microfarad, respectively, resistors 280 and 286 have magnitudes of 68K and 22K, respectively, resistors 290 and 298 both have magnitudes of 3.3K, and capacitor 296 has a magnitude of 0.1 microfarad. Optoisolators 300 and 302 are commercially available from Motorola under the designation MOC3061. Triacs 308 and 310 are type 06025L6, resistors 312 and 314 have magnitudes of 180 ohms and 1.2K, respectively, capacitor 316 has a magnitude of 0.1 microfarad, resistors 320 and 322 have magnitudes of 180 ohms and 1.2K, respectively, and capacitor 324 has a magnitude of 0.1 microfarad.

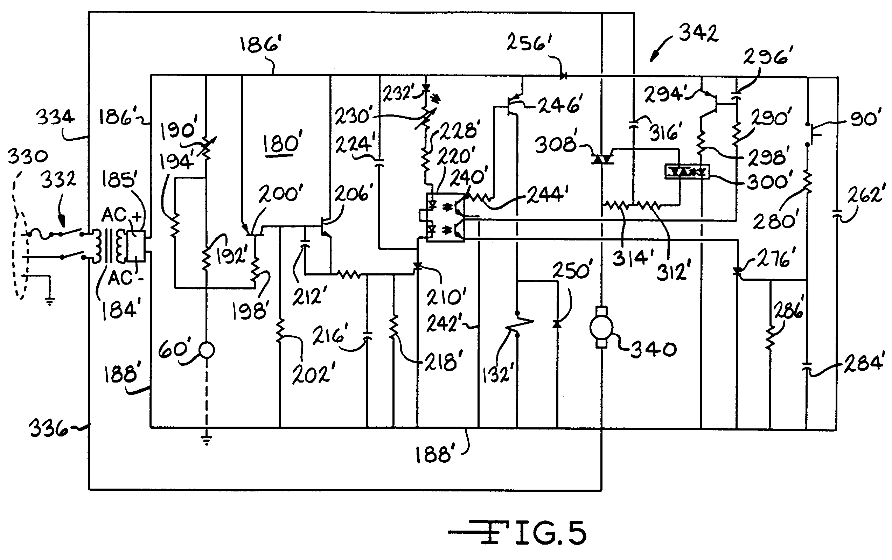

The circuit of Fig. 4 supplies 3-phase electrical power to motor 22. A substantially similar circuit for supplying single phase power is shown in Fig. 5 and operates in a substantially similar manner. In Fig. 5 components similar to those of Fig. 4 are identified by the name reference numerals with a prime designation. Single phone line voltage on cables designated 330 is applied to one side of switch 332 which is the analog of switch 170 in Fig. 4. Conductors 334 and 336 supply the line voltage to a single phase motor 340 when switch 332 is closed and under control of a motor control circuit 342 which operates in a manner substantially similar to motor control circuit 178 in Fig. 4. Sensing circuit 180 is identical in operation to sensing circuit 180 in Fig. 5.

As shown in Figs. 1 and 4, main power switch 170 is located on machine 10 external to the metal housing 72 containing motor 22 and insulated therefrom by means including plastic housing 320. The first conductor means or cable 172 supply line voltage to one side of main power switch 172. Connection can be provided by a connector 322 of the type shown in United States Patent No. 4,609,244 issued September 2, 1986 entitled "Electrical Connector" and assigned to the assignee of the present invention. The second conductor means 174 extends from the opposite side of switch 170 into metal housing 72 but insulated therefrom for supplying electrical power to motor 22. As a result of this arrangement according to the present invention, when the main power switch is opened, no line voltage is present on the second conductor mens 174 which is within housing 72. Accordingly, the foregoing arrangement prevents any electrical hazard to a person touching metal housing 72 when the switch is open. That is because the first conductor means 172 on which line voltage is present, even when switch 170 is opened, is located entirely outside of housing 72 and on the side of switch 160 electrically remote from housing 72.

It is therefore apparent that the present invention accomplishes its intended objects. While an embodiment of the present invention has been described in detail, that is for the purpose of illustration, not limitation.

## Claims

1. In a cutting machine comprising a housing having a base spaced therefrom, a motor carried by said housing, a handle extending from said housing, and a knife blade having a cutting edge and carried by said housing for reciprocal movement generally normal to said base in response to operation of said motor, the improvement comprising:
a) a control circuit for said motor;
b) an external layer of electrically conducting material on said handle; and
c) sensing circuit means including said layer of electrically conducting material and connected between said control circuit and an electrical reference, said sensing circuit being responsive to said handle being grasped and being released by the hand of a user of the machine;
d) so that when said handle is grasped by the user said motor is energized and when said handle is released by the user said motor is deenergized.

2. A cutting machine according to claim 1, further including time delay circuit means operatively coupled to said control circuit and to said sensing circuit so that said handle must be released for a predetermined time before said motor is deenergized.

3. A cutting machine according to claim 1, further including manually operated switch means operatively connected to said control circuit so that said switch means must be operated and said handle must be grasped by the user in order for said motor to be energized.

4. In a cutting machine comprising a housing having a base spaced therefrom, a motor carried by said housing, a handle extending from said housing, a knife blade having a cutting edge and carried by said housing for reciprocal movement generally normal to said base in response to operation of said motor, presser foot means carried by said housing located in spaced relation to said blade cutting edge and normally freely movable toward and away from said base, and electrically operated means for holding said presser foot means at selected distances from said base during operation of said machine, the improvement comprising:
a) an external layer of electrically conducting material on said handle; and
b) sensing circuit means including said layer of electrically conducting material and connected between said electrically operated holding means and an electrical reference, said sensing circuit means being responsive to said handle being grasped and being released by the hand of a user of the machine;
c) so that when said handle is grasped by the user said holding means maintains said presser foot means at a selected distance from said base and when said handle is released by the user said holding means releases said presser foot means to move to a position near said base.

5. A cutting machine according to claim 4, further including time delay circuit means operatively connected to said sensing circuit means and to said electrically operated holding means so that said handle must be released for a predetermined time before said holding means releases said presser foot means.

6. In a cutting machine comprising a housing having a base spaced therefrom, a motor carried by said housing, a handle extending from said housing and a knife blade having a cutting edge and carried by said housing for reciprocal movement generally normal to said base in response to operation of said motor, the improvement comprising:
a) a control circuit for said motor;
b) sensing circuit means operatively connected to said handle and responsive to said handle being grasped and being released by the hand of a user of the machine;
c) means for coupling said sensing circuit means to said motor control circuit so that when said handle is grasped by the user said motor is energized and when said handle is released by the user said motor is deenergized; and
d) time delay circuit means connected in controlling relation to said coupling means so that said handle must be released for a predetermined time before said motor is deenergized.

7. A cutting machine according to claim 6, further including manually operated switch means operatively connected to said motor control circuit so that said switch means must be operated and said handle must be grasped by the user in order for said motor to be energized.

8. In a cutting machine comprising a housing having a base spaced therefrom, a motor carried by said housing, a handle extending from said housing, a knife blade having a cutting edge and carried by said housing for reciprocal movement generally normal to said base in response to operation of said motor, presser foot means carried by said housing located in spaced relation to said blade cutting edge and normally freely movable toward and away from said base, and electrically operated means for holding said presser foot means at selected distances from said base during operation of said machine, the improvement comprising:
a) sensing circuit means operatively connected to said handle and responsive to said handle being grasped and being released by the hand of a user of the machine;
b) means for coupling said sensing circuit means to said electrically operated holding means so that when said handle is grasped by the user said holding means maintains said presser foot means at a selected distance from said base and when said handle is released by the user said holding means releases said pressure foot means to move to a position near said base; and
c) time delay circuit means connected in controlling relation to said coupling means so that said handle must be released for a predetermined time before said holding means releases said presser foot means.

9. In a cutting machine comprising a housing having a base spaced therefrom, a motor carried by said housing, a handle extending from said housing, a knife blade having a cutting edge and carried by said housing for reciprocal movement generally normal to said base in response to operation of said motor, presser foot means carried by said housing located in spaced relation to said blade cutting edge and normally freely movable toward and away from said base, and electrically operated means for holding said presser foot means at selected distances from said base during operation of said machine, the improvement comprising:
a) a control circuit for said motor;
b) an external layer of electrically conducting material on said handle; and
c) sensing circuit means including said layer of electrically conducting material and operatively connected to said motor control circuit, to said electrically operated holding means and to an electrical reference, said sensing circuit means being responsive to said handle being grasped and being released by the hand of a user of the machine;
d) so that when said handle is grasped by the user said motor is energized and said holding means maintains said presser foot means at a selected distance from said base and when said handle is released by the user said motor is deenergized and said holding means releases said presser foot means to move to a position near said base.

10. A cutting machine according to claim 9, further including time delay circuit means operatively connected to said sensing circuit means and to said electrically operated holding means and to said motor control circuit so that said handle must be released for a predetermined time before said motor is deenergized and said holding means releases said presser foot means.

11. A cutting machine according to claim 9, further including manually-operated switch means operatively connected to said motor control circuit so that said switch means must be operated and said handle must be grasped by- the user in order for said motor to be energized.

12. In a cutting machine comprising a housing having a base spaced therefrom, a motor carried by said housing, a handle extending from said housing, a knife blade having a cutting edge and carried by said housing for reciprocal movement generally normal to said base in response to operation of said motor, presser foot means carried by said housing located in spaced relation to said blade cutting edge and normally freely movable toward and away from said base, and electrically operated means for holding said presser foot means at selected distances from said base during operation of said machine, the improvement comprising:
a) a control circuit for said motor;
b) sensing circuit means operatively connected to said handle and responsive to said handle being grasped and being released by the hand of a user of the machine;
c) means for coupling said sensing circuit means to said motor control circuit and to said electrically operated holding means so that when said handle is grasped by the user said motor is energized and said holding means maintains said presser foot means at a selected distance from said base and when said handle is released by the user said motor is deenergized and said holding means releases said pressure foot means to move to a position near said base; and
d) time delay circuit means connected in controlling relation to said coupling means so that said handle must be released for a predetermined time before said motor is deenergized and before said holding means releases said presser foot means.

13. A cutting machine according to claim 12, further including manually-operated switch means operatively connected to said motor control circuit so that said switch means must be operated and said handle must be grasped by the user in order for said motor to be energized.

14. In a cutting machine comprising a metal housing having a base spaced therefrom, an electric motor within said housing, a handle extending from said housing enabling a person to move said machine during operation thereof, and a knife blade having a cutting edge and carried by said housing for reciprocal movement generally normal to operation of said motor, the improvement comprising:
a) a main electrical power switch located on said machine external to said metal housing and electrically insulated therefrom;
b) first conductor means for supplying line voltage to one side of said main power switch; and
c) second conductor means extending from the opposite side of said main power switch into said metal housing for supplying electrical power to said motor;
d) so that when said main electrical power switch is opened, no line voltage is present on said second conductor means thereby preventing any electrical hazard to a person touching said metal housing when said main power switch is opened.
